## Europäisches Patentamt

## European Patent Office

## Office européen des brevets

(11) Publication number: **0 039 073**
**B1**

(12) **EUROPEAN PATENT SPECIFICATION**

(45) Date of publication of patent specification: **13.02.85**

(21) Application number: **81103142.6**

(22) Date of filing: **27.04.81**

(51) Int. Cl.⁴: **F 23 L 1/02,** F 23 L 15/00, F 23 K 3/14

(54) Solid fuel burners.

(30) Priority: **29.04.80 GB 8014143**

(43) Date of publication of application:
**04.11.81 Bulletin 81/44**

(45) Publication of the grant of the patent:
**13.02.85 Bulletin 85/07**

(84) Designated Contracting States:
**BE DE FR NL SE**

(56) References cited:
**CH-A- 88 721**
**CH-A- 111 523**
**DE-C- 670 596**
**FR-A- 752 794**
**GB-A- 314 104**
**GB-A- 647 624**
**GB-A- 677 529**
**GB-A- 905 176**
**GB-A-1 214 483**
**US-A-2 210 720**
**US-A-2 851 972**
**US-A-3 149 625**

(73) Proprietor: **JOSHUA BIGWOOD & SON LIMITED**
**P.O. Box 23 Wednesfield Road**
**Wolverhampton West Midlands, WV10 0DP (GB)**

(72) Inventor: **Hitchman, Alan Frank**
**22 Glen Close**
**Walsall West Midlands (GB)**
Inventor: **Oliver, Ronald Walter**
**52 Langley Road**
**Lower Penn Wolverhampton Staffordshire (GB)**

(74) Representative: **Leach, John Nigel et al**
**FORRESTER & BOEHMERT Widenmayerstrasse 4/I**
**D-8000 München 22 (DE)**

Courier Press, Leamington Spa, England.

## Description

This invention relates to solid fuel burners and in particular is concerned with a method and means for igniting a bed of fuel in such a burner.

The invention has been developed in relation to solid fuel burners which are incorporated in boilers for heating water for central heating installations or to provide a supply of hot water or steam, such burners usually burning coal or coke, and the following description will therefore be confined to this application of the invention. However, it is to be understood that there is no limitation in this regard since the invention is also applicable to solid fuel burners used for other purposes, for example burners incorporated in furnaces, and which may burn coal or coke or other fuels such as straw or wood chippings.

The object of the invention is to provide a quick and effective method of igniting the fuel in a solid fuel burner and a simple form of ignition means capable of acting quickly and effectively to ignite the fuel in such a burner.

In DE—C—670596, there is disclosed a forced draught furnace with an undergrate blower and heating units for heating the air shortly before its point of discharge below the grate. There is also disclosed an alternative arrangement in which a special flow-line for delivering heated air to the grate or to the bed of fuel is provided, for use during heating-up of the fuel to establish combustion.

In GB—A—905176, there is disclosed a portable device for delivering electrically heated air into a bed of fuel, in order to establish combustion of the fuel.

According to a first aspect of the invention there is provided a method of igniting a bed of solid fuel in a burner having a side wall defining an open top of the burner, wherein fuel is fed into the bottom of the burner, hot air or gas at a first pressure is directed through a duct to the side wall and through a first opening in the side wall into a bed of the fuel in the burner, the first opening being at a level above the level at which fuel is fed into the burner and below the level of an upper surface of the bed and adjacent to the bed and wherein, after the fuel of the bed has been ignited, a flow of air into the bed through said first opening is maintained by feeding cooler air at a lower pressure to the first opening and air is also fed into the bed through further openings in the side wall.

Preferably the hot air or gas is directed against the fuel in the form of jets. To enhance the speed and effectiveness of the ignition the jets are preferably directed towards a common location within the bed of fuel beneath its upper surface, preferably at or adjacent the centre of the bed.

According to a second aspect of the invention, there is provided a solid fuel burner comprising a retort for holding a bed of fuel, an underfeed stoker for supplying fuel to the underside of the bed of fuel in the retort and a plurality of openings in the wall of the retort at a level above the stoker and below the top of the wall, characterised by a duct leading to at least one of said openings and air supply means for heating air, causing the heated air to flow at a first pressure along said duct and into the retort through said at least one opening and for maintaining a flow of cooler air at a lower pressure to the sidewall and into the retort through each of said openings after the fuel in the retort has been ignited.

Manifestly, the air or gas is at a temperature higher than the ignition temperature of the fuel so that it causes the fuel to ignite.

The facility provided by the present invention for rapid ignition is particularly advantageous in solid fuel-fired boilers of central heating installations since the boiler can be shut down at the end of each day and easily and quickly re-started next day, thereby saving fuel. It is not necessary to maintain the boiler in a slow burning state overnight.

The invention will now be described, by way of example, with reference to the accompanying drawings, in which:—

FIGURE 1 is a perspective view of one type of solid fuel burner equipped with one form of ignition means embodying the invention,

FIGURE 2 is a longitudinal section through the retort of the burner,

FIGURE 3 is a cross-section taken on the line A—A in Figure 1, and

FIGURE 4 is a partial perspective view corresponding to Figure 1 showing a modification of the ignition means.

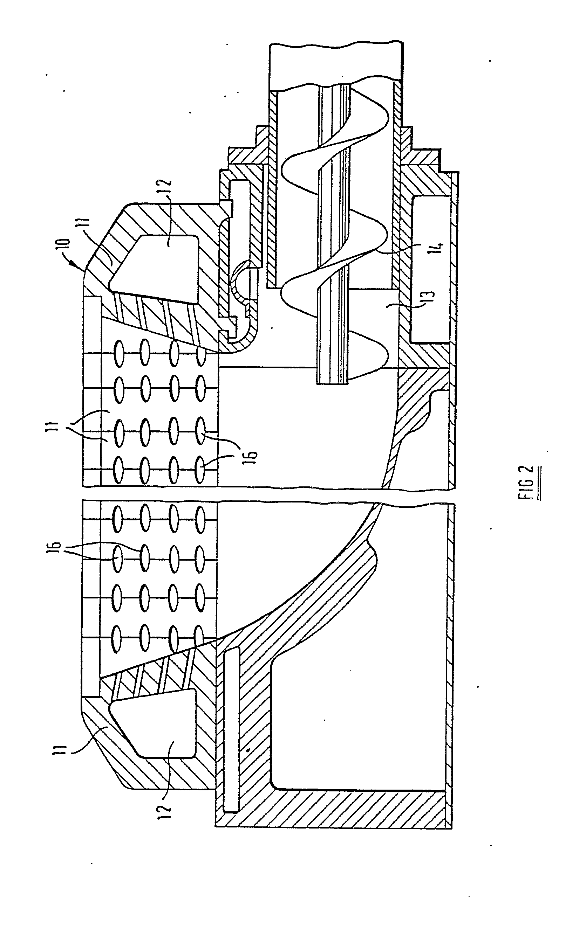

The solid fuel burner illustrated in the drawings is of the type comprising a retort 10 of rectangular shape in plan and having a continuous side wall formed by tuyere blocks 11. The tuyere blocks are of cast iron and hollow as seen in Figure 2 so that there is a continuous passageway 12 through the side wall which communicates with the interior of the retort through the tuyeres 16 in the tuyere blocks. The bottom of the retort curves downwardly as shown in Figure 2 towards a fuel inlet 13 which contains an underfeed stoker in the form of a feed screw 14 arranged to deliver fuel from a bunker (not shown) to the retort. The side wall of the retort projects above a refractory surround 15, and the retort and the surround together form the bottom of a combustion chamber having a boiler (not shown) mounted above the retort. The boiler is arranged to supply hot water or steam to, for example, a central heating installation in a school, factory or office block, and the hot gases from the combustion chamber, after heating the water in the boiler, are carried away through a flue (not shown).

In use, the feed screw 14 is operated to maintain a bed of fuel, for example coal, in the retort to a level such that it almost spills over the side wall of the retort, the operation of the feed screw being controlled by means sensing the temperature of the water in the boiler so that this temperature can be maintained at the required level by controlling the rate of feed of fuel to the retort and hence the rate at which fuel is burnt in the retort.

Air at a relatively low pressure is supplied to the passageway 12 in the side wall of the retort by a blower (not shown) so that streams of air issue from the tuyeres 16 in the tuyere blocks 11 and thereby produce a forced underdraught to promote burning of the bed of fuel in the retort.

The burner is equipped with ignition means which are operative to ignite the bed of fuel which is either left in the retort after shutting down of the boiler or, if the retort is initially empty, is provided by operation of the feed screw for a short time.

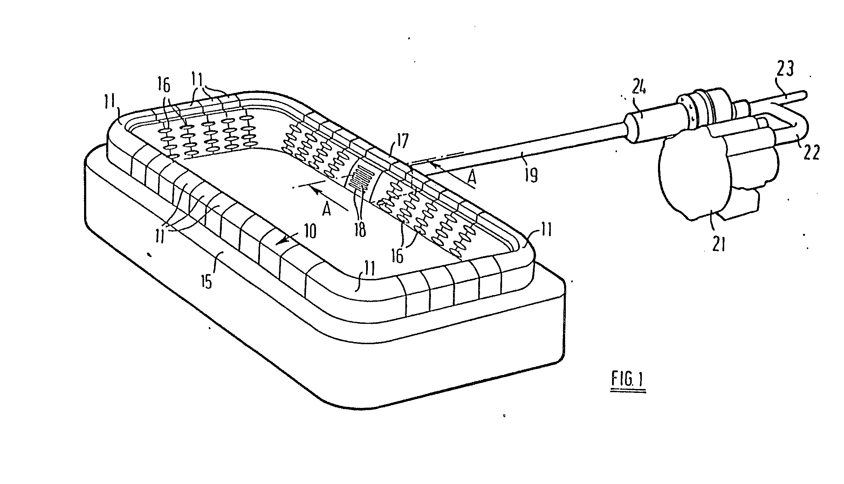

The ignition means shown in Figures 1 to 3 includes an air jet block 17 which is incorporated in the side wall of the retort in place of a conventional tuyere block. The air jet block is disposed at the centre of one of the long sides of the retort so that it is as near as possible to the centre of the fuel bed (although it could be mounted in one of the shorter sides).

The air jet block 17 is a hollow cast iron body, the inner wall of which is formed with a number of air jet slots 18 and the outer wall of which is formed with an inlet 31 which receives one end of a pipe 19 connected to means operable to supply hot air at a relatively high pressure through the pipe to the cavity in the block 17, whereby jets of hot air issue from the air jet slots 18 into the fuel bed to ignite the latter. The block 17 has side walls which abut the adjacent tuyere blocks 11 so that the cavity in the block 17 is shut off from the passageway in the side wall of the retort and no pressurised hot air from the pipe 19 can therefore enter the passageway.

The means for supplying hot air at a relatively high pressure to the air jet block 17 comprises a blower 21 connected by a branch pipe 22 to a main pipe 23 which is connected at one end through an electric heater 24 to the pipe 19. The main pipe is connected at its other end to the blower which supplies air at a relatively low pressure to the passageway 12 in the side wall of the retort to produce the forced underdraught. The two blowers are driven by electric motors.

As shown in Figure 3, the cavity in the air jet block 17 tapers in a direction from the pipe 19 towards the slots 18 and the slots are angled towards a common location below the upper surface of the bed of fuel and at or adjacent the centre of the bed so that the jets of hot air issuing from the slots are directed to the location at which ignition is required to take place, which enhances the speed and effectiveness of the ignition.

The inlet 31 in the outer wall of the air jet block 17 which receives the pipe 19 is slightly larger in diameter than the pipe and the cross-sectional area of the mouth of the pipe is smaller than the area between the mouth of the pipe and the surrounding portion of the housing of the block. This, coupled with the provision of two ports 20 in the outer wall of the block, ensures that no smoke from the burning fuel passes into the pipe 19, which could damage the heating elements of the air heater 24.

The boiler is ignited and operated in the following manner.

With a bed of fuel in the retort, the blower 21 and the heater 24 are switched on. The blower draws air from the atmosphere and blows it through the heater. When the fuel has been ignited by the jets of hot air at a relatively high pressure which as a result issue from the air jet slots 18 into the bed, the blower and heater are switched off and the other blower is switched on and the feed screw 14 started. This other blower blows air at a relatively low pressure into the passageway 12 in the side wall of the retort, thereby to provide the forced underdraught promoting burning of the fuel in the retort. Air from the other blower also flows through the pipes 23 and 19 into the cavity in the air jet block 17 and this assists in preventing smoke passing into the pipe 19 and damaging the heating elements of the heater 24.

Instead of two separate blowers, the burner may have a single two-speed blower operable at a high speed to supply air at a relatively high pressure to the air jet block 17 for ignition of the fuel and at a low speed to supply air at a relatively low pressure to both the tuyere blocks 11 and the air jet block to produce the forced underdraught and to prevent smoke entering the pipe 19.

In a modification, the pipe 22 from the blower 21 may be connected directly to the heater 24 and the pipe 23 from the other blower may be connected to any desired point along the pipe 19.

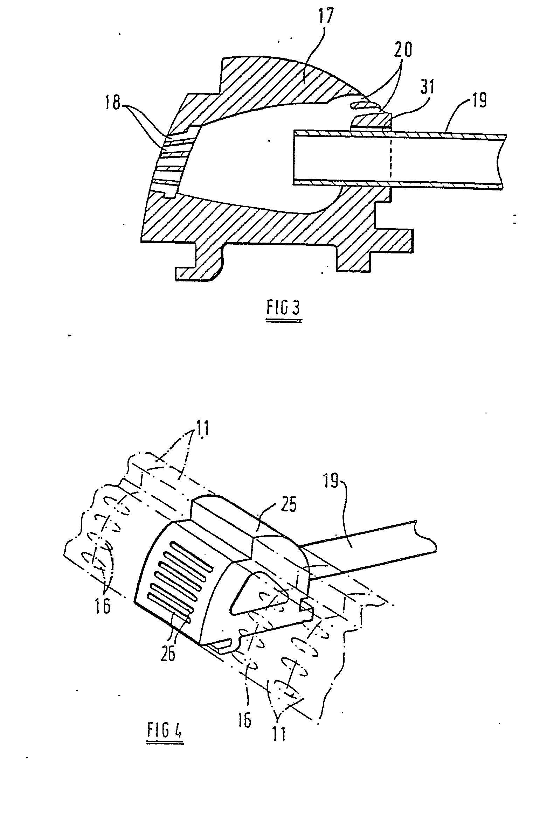

In the modification shown in Figure 4 the ignition means includes an air jet block 25 which is incorporated in the side wall of the retort 10 in the same way as the air jet block 17 in the embodiment of Figures 1 to 3. The air jet block 25 is identical to the block 17 except that it has no side walls so that the cavity therein is in communication with, and in fact forms part of the passageway 12 in the side wall of the retort.

The air jet block 25 has air jet slots 26 in its inner wall and the pipe 19 extends into an inlet in its outer wall. The main pipe 23 of the blower 21 is omitted in this case and the branch pipe 22 is connected directly to the electric heater 24.

When a bed of fuel in the retort is required to be ignited, the blower 21 and the heater 24 are switched on and hot air at a relatively high pressure is therefore supplied to the cavity in the air jet block 25. As a result, jets of hot air issue from the air jet slots 26 in the block and impinge on fuel at or near the centre of the bed and beneath its upper surface whereby the fuel is ignited. Since the pipe 19 is disposed opposite and in line with the air jet slots and the air is at a relatively high pressure, no air, or only a small amount of air, flows into the passageway 12 in the side wall of the retort.

When ignition has taken place, the heater and the blower are switched off and the other blower is brought into operation to supply air at a relatively low pressure to the passageway in the side wall of the retort (this air entering the passageway at a location along one of the short sides of the retort). The resultant streams of air from the tuyeres 16 produce a forced underdraught in the retort which promotes burning of the fuel, the fuel being maintained at the required level in the retort by operation of the feed screw at appropriate times.

The air at a relatively low pressure introduced into the passageway in the side wall of the retort, flows through the cavity in the air jet block and across the mouth of the pipe 19 therein, and this assists in preventing smoke from the burning fuel entering the pipe and damaging the heating elements of the heater 24.

In both embodiments shown in the drawings, the hot air which is directed into the bed of fuel to ignite it, is at a temperature higher than the ignition temperature of the fuel.

Where the fuel is coal, it is first dried by the hot air, then as the temperature increases, it begins to decompose. Gases are evolved into the combustion chamber above the fuel, while the solid residue is converted first into "semi-coke" and then into coke. As decomposition of the coal by carbonisation proceeds, the proportions of tarry vapours, hydrocarbons and hydrogen in the gases will rise to a maximum and then decrease as more coal becomes converted to coke.

To obtain the ignition temperature in the fuel bed, it is necessary to generate sufficient heat to compensate for all losses including the heat absorbed in chemical reactions.

If the bed is left to cool, a layer of ashes will cover the stratas of coke, semi-coke and fresh coal in the retort. If the feed screw is switched on for a short period before the hot air is applied, these layers of material rise and mix together above the following fresh coal. When the hot air is applied, some of its heat is lost in raising the temperature of the ash but less is absorbed in chemical reactions as much of the material is in the form of coke.

To light the fuel bed therefore, there must be sufficient heat in the air to raise the fuel to its ignition temperature and to compensate for the following losses:—

(a) Excess hot air passing through the fuel bed and out of the flue;

(b) The heat required to dry the fuel;

(c) The heat needed to raise the temperature of any ashes present;

(d) The heat absorbed in chemical reactions.

In addition, account has to be taken of losses which occur as the air travels from the heater to the fuel bed.

There are three conditions in which fuel may require to be ignited:—

(a) After a fire has been allowed to cool for a few hours, say overnight, but the ashes and coal are still quite warm;

(b) When a fire has been left to cool for a long period of time, say a weekend, and the ashes are cold;

(c) When the retort has been cleaned and charged with fresh coal.

In the first circumstance, the fire can be readily relit by raising the level of the warm material in the retort by means of the feed screw while air is supplied by the underdraught blower. The ignition means does not have to be employed if the rate of cooling of the fire is known and the period for self-igniting determined.

The ignition means has to be used in the second and third circumstances.

When a fire is permitted to cool, its level will fall below the air jet block. The feed screw must be operated, therefore, for a few minutes to raise the level of the fuel bed to the top of the retort.

Control means may be provided for automatically controlling the ignition and operation of the burner.

In a specific example, where the fuel is coal, the blower 21 operates at a delivery rate of 1200 litres per minute and a pressure of 31 inches water gauge, and the heater heats the air to a temperature of 600°C. Operation of the blower and heater for a pre-set period of about five minutes should be sufficient to ignite the coal.

The material in the bed may not ignite in this pre-set period due to abnormal conditions. It will be necessary therefore to include a thermostat in the flue to detect when this happens and cause the ignition cycle to be repeated.

**Claims**

1. A method of igniting a bed of solid fuel in a burner having a side wall defining an open top of the burner, wherein fuel is fed into the bottom of the burner, hot air or gas at a first pressure is directed through a duct to the side wall through a first opening in the side wall into a bed of the fuel in the burner, the first opening being at a level above the level at which fuel is fed into the burner and below the level of an upper surface of the bed and adjacent to the bed and wherein, after the fuel of the bed has been ignited, a flow of air into the bed through said first opening is maintained by feeding cooler air at a lower pressure to the first opening and air is also fed into the bed through further openings in the side wall.

2. A method as claimed in Claim 1 wherein the hot air or gas is directed into the bed of fuel in the form of jets.

3. A method as claimed in Claim 2 wherein the jets of hot air or gas are directed towards a common location within the bed of fuel beneath its upper surface.

4. A solid fuel burner comprising a retort (10) for holding a bed of fuel, an underfeed stoker (14) for supplying fuel to the underside of the bed of fuel in the retort and a plurality of openings (16, 18) in the wall of the retort at a level above the stoker and below the top of the wall, characterised by a duct (19) leading to at least one (18) of said openings and air supply means for heating air, causing the heated air to flow at a first pressure along said duct and into the retort through said at least one opening and for maintaining a flow of cooler air at a lower pressure to the sidewall and into the retort through each of said openings after the fuel in the retort has been ignited.

5. A burner as claimed in Claim 4 wherein there is incorporated in the side wall of the retort a hollow body (17), said one opening (18) having provided in the inner wall of the body facing inwardly of the retort, and said duct (19) being connected between the cavity defined by the hollow body and the means (21, 24) for supplying hot air or gas at said first pressure.

6. A burner as claimed in Claim 5 wherein the hollow body is provided with a plurality of said openings (18) arranged to direct jets of hot air or gas which issue from the openings towards a common location within the bed of fuel beneath its upper surface.

7. A burner as claimed in Claim 5 or Claim 6 wherein said duct (19) is connected to an inlet (31) provided in the outer wall of the hollow body opposite the said opening or openings, the cavity in the body tapering in a direction from the inlet towards the opening or openings.

8. A burner as claimed in any one of Claims 5, 6 and 7, wherein the side wall of the retort has an internal passageway which is connected to the means for supplying air or gas at a lower pressure and is provided with a plurality of outlets (16) opening inwardly of the retort and arranged to direct streams of air or gas into the retort to promote burning of the fuel, the cavity in said hollow body being shut off from the passageway and also being connected to the means for supplying air or gas at a lower pressure.

9. A burner as claimed in any one of Claims 5, 6 and 7 wherein the side wall of the retort has an internal passageway which is connected to the means for supplying air or gas at a lower pressure and is provided with a plurality of outlets (16) opening inwardly of the retort and arranged to direct streams of air or gas into the retort to promote burning of the fuel, the cavity in said hollow body being in communication with, and forming part of, the said passageway.

**Revendications**

1. Procédé d'allumage d'un lit de combustible solide dans un brûleur ayant une paroi latérale définissant un ciel ouvert du brûleur, dans lequel le combustible est approvisionné dans le bas du brûleur, de l'air ou du gaz chaud sous une première pression est dirigé à travers une conduite vers la paroi latérale, à travers un premier orifice situé dans la paroi latérale, dans un lit de combustible dans le brûleur, le premier orifice étant à un niveau situé au-dessus du niveau auquel le combustible est chargé dans le brûleur et en-dessous du niveau d'une surface supérieure et adjacente au lit, et dans lequel, après que le combustible du lit ait été enflammé, un courant d'air est maintenu à travers le premier orifice, par approvisionnement d'un air plus frais sous une pression plus faible au premier orifice et de l'air est aussi introduit dans le lit à travers d'autres orifices situés dans la paroi latérale.

2. Procédé selon la revendication 1, dans lequel l'air ou le gaz chaud est dirigé dans le lit de combustible sous la forme de jets.

3. Procédé selon la revendication 2, dans lequel les jets d'air ou de gaz chaud sont dirigés vers un lieu commun a l'interieur du lit de combustible sous sa surface supérieure.

4. Brûleur pour combustible solide comprenant une cornue (10) de maintien d'un lit de combustible, un chargeur d'alimentation par en-dessous (14) pour alimenter en combustible le dessous d'un lit de combustible dans la cornue, et une pluralité d'orifices (16, 18) situés dans la paroi de la cornue à un niveau sis au-dessus de celui du chargeur et en-dessous du sommet de la paroi, caractérisé par une conduite (19) conduisant à au moins un (18) desdits orifices et des moyens d'alimentation en air pour chauffer l'air amenant l'air chauffé à s'écouler sous une première pression au long de ladite conduite et dans la cornue à travers au moins ledit orifice, et pour maintenir un écoulement d'air plus frais sous une pression plus basse vers la paroi latérale et dans la cornue, à travers chaque orifice après que le combustible situé dans la cornue ait été enflammé.

5. Brûleur selon la revendication 4, dans lequel est incorporé dans la paroi latérale de la cornue un corps creux (17), ledit orifice (18) étant prévu dans la paroi interne du corps tournée vers l'intérieur de la cornue, et ladite conduite (19) étant raccordée entre la cavité définie par le corps creux et les moyens (21, 24) d'alimentation en air ou en gaz chaud sous ladite première pression.

6. Brûleur selon la revendication 5, dans lequel le corps creux est pourvu d'une pluralité desdits orifices (18) agencés pour diriger les jets d'air ou de gaz chaud qui proviennent des orifices vers un point commun à l'intérieur du lit de combustible sous sa surface supérieure.

7. Brûleur selon la revendication 5 ou la revendication 6, dans lequel ladite conduite (19) est raccordée à une entrée (31) prévue dans la paroi externe du corps creux située en face du ou desdits orifices, la cavité située dans le corps s'amincissant dans une direction partant de l'orifice d'entrée vers le ou les orifices.

8. Brûleur selon l'une quelconque des revendications 5, 6 et 7, dans lequel la paroi latérale de la cornue a un passage interne que est raccordé aux moyens d'alimentation en air ou en gaz sous une pression plus basse et est pourvue d'une pluralité d'orifices de sortie (16) s'ouvrant vers l'intérieur de la cornue et agencée pour diriger les courants d'air ou de gaz dans la cornue pour favoriser la combustion du combustible, la cavité dudit corps creux étant coupée du passage et étant aussi raccordée aux moyens d'alimentation en air ou en gaz sous une plus faible pression.

9. Brûleur selon l'une quelconque des revendications 5, 6 et 7, dans lequel la paroi latérale de la cornue possède un passage interne qui est raccordé aux moyens d'alimentation en air ou en gaz sous une pression plus basse et est pourvue d'une pluralité d'orifices de sortie (16) s'ouvrant vers l'intérieur de la cornue et agencés pour diriger les courants d'air ou de gaz dans la cornue pour favoriser l'ignition du combustible, la cavité dudit corps creux étant en communication avec, et formant une partie dudit passage.

**Patentansprüche**

1. Verfahren zum Zünden eines Bettes festen Brennstoffes in einem Brenner mit einer ein offenes oberes Ende des Brenners begrenzenden Seitenwand, worin Brennstoff in den Unterabschnitt des Brenners zugeführt wird, wobei heiße Luft oder Gas unter einem ersten Druck durch eine Leitung zur Seitenwand durch eine erste Öffnung in der Seitenwand in ein Brennstoffbett im Brenner geleitet wird, wobei sich die erste Öffnung auf einem Niveau oberhalb des Niveaus, auf dem Brennstoff in den Brenner eingeführt wird und unterhalb des Niveaus einer oberen Oberfläche des Bettes und neben ddas Bett zu leiten, wobei nach Zünden des Brennstoffes des Bettes ein Luftfluß in das Bett durch die erste Öffnung durch Zufuhr kälterer Luft mit niedrigerem Druck zur ersten Öffnung und auch Zufuhr von Luft in das Bett durch weitere Öffnungen in der Seitenwand aufrechterhalten wird.

2. Verfahren wie in Anspruch 1 beansprucht, wobei die Heißluft oder das Gas in das Brennstoffbett in Form von Strahlen gerichtet wird.

3. Verfahren wie in Anspruch 2 beansprucht, wobei die Heißluft- oder Gasstrahlen auf eine gemeinsame Stelle innerhalb des Brennstoffbettes, unterhalb dessen Oberfläche, gerichtet werden.

4. Feststoffbrenner mit einer ein Brennstoffbett haltenden Retorte (10), einer unterschubgefeuerten Kohlebeschickungsvorrichtung (14) zur Zufuhr von Brennstoff zur Unterseite des Brennstoffbettes in der Retorte und mehreren Öffnungen (16, 18) in der Retortenwand auf einem Niveau oberhalb der Kohlebeschickungsvorrichtung und unter dem oberen Wandende, gekennzeichnet durch eine zu mindestens einer (18) der Öffnungen führende Leitung (19) und Luftzufuhrvorrichtungen zum Erhitzen von Luft, wodurch die erhitzte Luft dazu veranlaßt wird, mit einem ersten Druck entlang der Leitung in die Retorte durch die eine Öffnung zu fließen, und um einen Fluß kühlerer Luft bei niedrigerem Druck zur Seitenwand und in die Retorte durch jede der Öffnungen nach Zünden des Brennstoffes in der Retorte aufrechtzuerhalten.

5. Brenner, wie in Anspruch 4 beansprucht, wobei in der Seitenwand der Retorte ein Hohlkörper (17) eingefügt ist, wobei die eine Öffnung (18) in der Innenwand des Körpers, in das Retorteninnere gerichtet, vorgesehen ist, und die Leitung (19) zwischen dem Hohlraum, der durch den Hohlkörper begrenzt ist und den Einrichtungen (21, 24) zur Zufuhr heißer Luft oder Gases mit dem ersten Druck angeschlossen ist.

6. Brenner, wie in Anspruch 5 beansprucht, wobei der Hohlkörper mit mehreren Öffnungen (18) ausgerüstet ist, die derart angeordnet sind, daß sie Strahlen heißer Luft oder Gases, die aus den Öffnungen austreten gegen eine gemeinsame Stelle innerhalb des Brennstoffbettes unterhalb dessen Oberfläche, richten.

7. Brenner wie in Anspruch 5 oder 6 beansprucht, wobei die Leitung (19) mit einem Einlaß (31), der in einer Außenwand des Hohlkörpers gegenüber der Öffnung oder den Öffnungen angeordnet ist, wobei der Hohlraum im Körper sich in Richtung vom Einlaß gegen die Öffnung oder Öffnungen verjüngt.

8. Brenner, wie in irgendeinem der Ansprüche 5, 6 und 7 beansprucht, wobei die Seitenwand der Retorte eine interne Passage besitzt, die mit den Einrichtungen zur Zufuhr von Luft oder Gas bei niedrigerem Druck angeschlossen ist und mit mehreren Auslässen (16) versehen ist, die sich in das Retorten innere öffnen und derart angeordnet sind, daß sie Ströme von Luft oder Gas in die Retorte richten, um das Brennen des Brennstoffes zu befördern, wobei der Hohlraum im Hohlkörper von den Passagen abgeschlossen ist und auch mit den Einrichtungen zur Zufuhr von Luft oder Gas bei niedrigerem Druck verbunden ist.

9. Brenner, wie in irgendeinem der Ansprüche 5, 6 und 7 beansprucht, wobei die Seitenwand der Retorte eine interen Passage besitzt, die mit den Einrichtungen zum Zuführen von Luft oder Gas bei einem niedrigeren Druck verbunden ist, besitzt und mit mehreren Auslässen (16) versehen ist, die sich in das Retorteninnere öffnen und derart angeordnet sind, daß sie Strome von Luft oder Gas in die Retorte richten, um das Verbrennen des Brennstoffes zu befördern, wobei der Hohlraum in dem Hohlkörper mit der Passage verbunden ist oder einen Teil derselben bildet.

FIG. 1

0039073

FIG 2

FIG 3

FIG 4